# FASCICULE DE BREVET EUROPEEN

(11) **EP 3 503 431 B1**
(45) Date de publication et mention de la délivrance du brevet: **08.06.2022**
(21) Numéro de dépôt: 18214326.3
(22) Date de dépôt: 20.12.2018
(51) Int. Cl.: H04B 7/185, H04B 7/204

(54) **PROCEDE DE COUVERTURE MULTIFAISCEAUX PAR REGROUPEMENT DE FAISCEAUX ELEMENTAIRES DE MEME COULEUR, ET CHARGE UTILE DE TELECOMMUNICATIONS POUR METTRE EN UVRE UN TEL PROCEDE**
VERFAHREN ZUR MEHRFACHSTRAHLABDECKUNG DURCH GRUPPIEREN VON ELEMENTARSTRAHLEN DERSELBEN FARBE, UND NUTZLAST VON TELEKOMMUNIKATIONSVORGÄNGEN ZUR UMSETZUNG DIESES VERFAHRENS
METHOD FOR MULTI-BEAM COVERAGE BY GROUPING BASIC BEAMS OF THE SAME COLOUR, AND TELECOMMUNICATIONS PAYLOAD FOR IMPLEMENTING SUCH A METHOD

(30) Priorité: 21.12.2017 FR 1701345
(43) Date de publication de la demande: 26.06.2019
(73) Titulaire: Thales, 92400 Courbevoie (FR)
(72) Inventeur: BOSSHARD, Pierre, 31037 Toulouse Cedex 1 (FR); LE BOULC'H, Didier, 31037 Toulouse Cedex 1 (FR)
(74) Mandataire: Marks & Clerk France

(56) Documents cités:
- DE-A1- 10 021 112
- US-A1- 2017 181 160
- US-A1- 2017 289 822

## Description

L'invention relève du domaine des télécommunications par satellite. Plus particulièrement, elle porte sur un procédé pour réaliser une couverture multifaisceaux d'une région de la surface terrestre, ainsi que sur une charge utile de télécommunications, destinée à être embarquée sur un satellite, permettant la mise en œuvre d'un tel procédé.

La recherche de capacités de transmission élevées dans les systèmes de communication par satellite impose le recours à des antennes à faisceaux multiples pour réaliser des couvertures dites « multifaisceaux » d'une région d'intérêt de la surface terrestre. Une telle couverture se présente sous la forme d'une juxtaposition de couvertures individuelles géographiquement distinctes, contiguës ou non contigües, généralement de forme circulaire ou elliptique et correspondant aux empreintes au sol de différents faisceaux générés par un satellite de télécommunication. Il convient de noter que le terme « faisceau » peut recouvrir deux réalités distinctes : lorsqu'on considère une liaison descendante, il est effectivement question de faisceaux de rayonnement électromagnétique se propageant du satellite vers le sol ; dans le cas d'une liaison ascendante, par contre, on indique par « faisceau » un lobe du diagramme de réception du système antennaire du satellite.

Les couvertures multifaisceaux permettent généralement la réutilisation de la fréquence selon un schéma dit « à N couleurs ». Selon un tel schéma, afin d'éviter les interférences, deux faisceaux adjacents présentent une « couleur » différente, chaque « couleur » correspondant à une paire fréquence - état de polarisation.

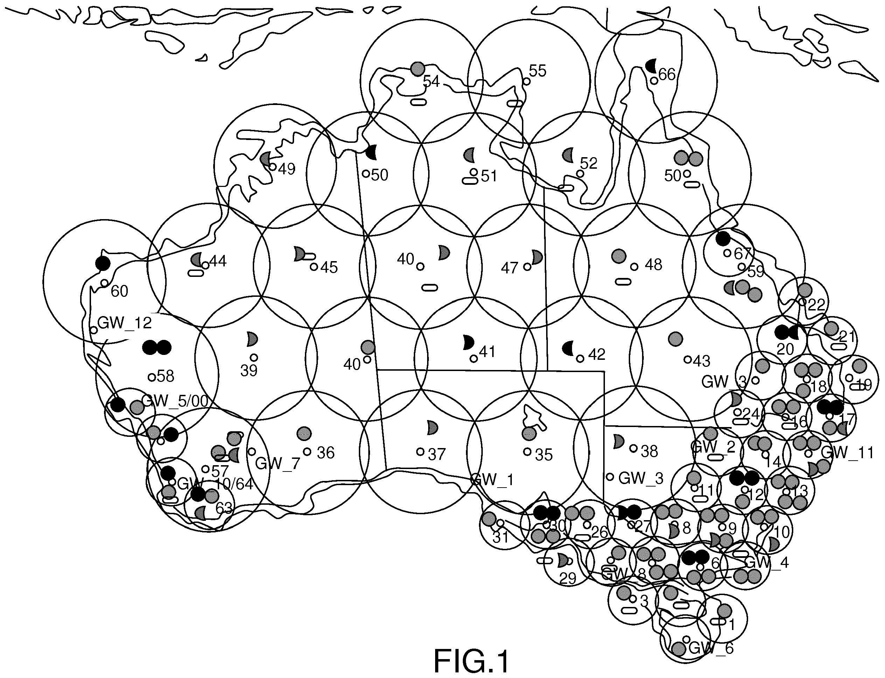

La disparité des besoins en trafic de données entre différentes parties de la région d'intérêt peut être très importante ; il est donc nécessaire de faire varier la taille des faisceaux desservant ces différentes parties. Ainsi, il est usuel d'utiliser des faisceaux fins d'ouverture angulaire minimale dans les zones a forte densité d'utilisateurs, et des faisceaux larges d'ouverture angulaire importante dans les zones a faible densité d'utilisateurs. A titre d'exemple, la figure 1 montre une couverture multifaisceaux de l'Australie présentant des faisceaux très larges dans les zones peu peuplées du centre et du nord et des faisceaux beaucoup plus fins dans les régions côtières du sud-ouest et du sud-est.

Le document DE 100 21 112 A1 divulgue un système de communications par satellite, dans lequel des méta-faisceaux, combinant plusieurs faisceaux individuels, sont créés, afin d'obtenir une couverture dynamique, sans utiliser d'antennes complexes.

Dans un satellite adapté pour réaliser une couverture multifaisceaux, les faisceaux sont généralement générés par des systèmes d'antenne comprenant des antennes sources (ou simplement « sources » ; il s'agit généralement des cornets ou ensembles de cornets) et des réflecteurs. Typiquement, chaque antenne source génère un faisceau respectif, tandis qu'un même réflecteur peut contribuer à la génération de plusieurs faisceaux distincts. La taille d'un faisceau dépend à la fois des caractéristiques de l'antenne source et de celles du réflecteur ; en outre, un réflecteur est optimisé pour une source présentant certaines caractéristiques. En pratique, des sources différentes peuvent générer des faisceaux de taille légèrement différente à l'aide d'un même réflecteur, mais la désadaptation entre source et réflecteur devient rapidement problématique. Par conséquent, pour pouvoir générer une couverture multifaisceaux comprenant des faisceaux de tailles très différentes (rapport entre les surfaces des empreintes au sol pouvant atteindre, voire dépasser, un facteur 4) il est nécessaire d'utiliser plusieurs réflecteurs différents. Cela conduit à des systèmes antennaires complexes et coûteux.

Par ailleurs, les faisceaux de grandes dimensions présentent des pentes de diagramme d'émission beaucoup moins raides que les faisceaux plus directifs ; en d'autres termes, leur intensité décroit de manière plus progressive en s'éloignant du centre du faisceau. Par conséquent, les « queues » des faisceaux de grande taille tendent à interférer avec les plus petits faisceaux.

L'invention vise à remédier, en tout ou en partie, à au moins un des inconvénients précités de l'art antérieur. Plus particulièrement, l'invention vise à permettre la réalisation d'une couverture multifaisceaux au

moyen d'un système antennaire plus simple et plus facilement industrialisable, et/ou à minimiser les interférences entre faisceaux. Certains modes de réalisation de l'invention permettent également d'obtenir une plus grande flexibilité dans la définition des faisceaux.

Un objet de l'invention, permettant d'atteindre ces buts, est donc un procédé de couverture multifaisceaux d'une région de la surface terrestre comportant :
- la génération, par une charge utile de télécommunications embarquée sur un satellite, d'une pluralité de faisceaux à radiofréquence, dits faisceaux élémentaires (FE1, FE2, FE4) ;
- la formation d'une pluralité de faisceaux à radiofréquence, dits composites (FC', FC"), présentant des empreintes au sol de tailles différentes, chaque dit faisceau composite étant obtenu par regroupement d'un ou plusieurs faisceaux élémentaires ; et
- l'émission ou la réception de données à travers lesdits faisceaux composites, des données identiques étant émises ou reçues à travers tous les faisceaux élémentaires formant un même faisceau composite ;
dans lequel au moins un dit faisceau composite est formé par regroupement d'une pluralité de faisceaux élémentaires non adjacents et de même couleur, une couleur étant définie par une bande de fréquence et un état de polarisation, le procédé comprend l'introduction d'un déphasage entre au moins deux desdits faisceaux élémentaires non adjacents et de même couleur formant ledit faisceau composite.

Avantageusement, ledit déphasage est une inversion de phase.

En variante, ledit déphasage est une mise en quadrature de phase.

Avantageusement, une pluralité desdits faisceaux élémentaires présente des empreintes au sol de taille sensiblement identique.

Avantageusement, tous lesdits faisceaux élémentaires présentent des empreintes au sol de taille sensiblement identique.

Avantageusement, les empreintes au sol desdits faisceaux composites présentent des tailles qui varient de manière progressive à travers ladite région de la surface terrestre.

Avantageusement, tous les faisceaux élémentaires formant un même faisceau composite sont générés en même temps.

En variante, tous les faisceaux élémentaires formant un même faisceau composite sont générés à tour de rôle.

L'invention se rapporte aussi à une Charge utile de télécommunications par satellite pour la mise en œuvre d'un procédé prédéfini comprenant :
- une pluralité d'antennes sources (S1 - S4) ;
- au moins un réflecteur (R) agencé pour coopérer avec lesdites antennes sources de manière à générer un faisceau à radiofréquence, dit faisceau élémentaire, pour chaque dite antenne source ; et
- une pluralité de modules d'émission ou de réception (MTR_{A}, MTR_{B}) configurés pour émettre ou recevoir des données respectives sous la forme de signaux à radiofréquence ;

chaque dite antenne source appartient à un groupement d'antennes sources, au moins certains desdits groupements comprenant une pluralité d'antennes sources ;
chaque dit module d'émission est relié à l'ensemble des antennes sources appartenant à un même groupement, de telle sorte que les faisceaux élémentaires générés par les antennes sources d'un même groupement forment un faisceau composite ; chaque module d'émission ou de réception d'un dit groupement est configuré pour émettre ou recevoir des données identiques à travers tous les faisceaux élémentaires formant un même faisceau composite;
lesdits groupements d'antennes sources étant configurés de telle sorte qu'une pluralité desdits faisceaux composites présentent des empreintes au sol de tailles différentes ; et
les antennes élémentaires d'au moins un dit groupement sont configurées pour générer des faisceaux élémentaires non adjacents et de même couleur, une couleur étant définie par une bande de fréquence et un état de polarisation, et un déphaseur (DΦ) est agencé entre au moins une antenne élémentaire d'au moins un dit groupement configuré pour générer des faisceaux élémentaires non adjacents et de même couleur et le module d'émission ou de réception correspondant, le déphaseur étant configuré pour introduire un déphasage entre au moins deux faisceaux élémentaires non adjacents et de même couleur formant un faisceau composite.

Avantageusement, ledit ou chaque dit déphaseur est un inverseur de phase.

Avantageusement, ledit ou chaque dit déphaseur est configuré pour effectuer un déphasage à 90°.

Avantageusement, lesdits groupements d'antennes sources sont configurés de telle sorte que tous lesdits faisceaux élémentaires présentent des empreintes au sol de taille sensiblement identique

Avantageusement, au moins un dit module d'émission ou de réception est équipé d'un commutateur configuré pour relier ledit module aux antennes élémentaires correspondantes à tour de rôle.

D'autres caractéristiques, détails et avantages de l'invention ressortiront à la lecture de la description faite en référence aux dessins annexés donnés à titre d'exemple et qui représentent, respectivement :
- La figure 1, décrite plus haut, la couverture multifaisceaux d'une région présentant une densité d'utilisateur fortement variable ;
- les figures 2A à 2C, un mode de réalisation d'une couverture multifaisceaux ; et
- la figure 3, une charge utile de télécommunications selon un mode de réalisation de l'invention.

Un principe à la base de l'invention consiste à couvrir la région d'intérêt avec des faisceaux fins de taille identique - ou tout au plus présentant un nombre réduit (par exemple 2 ou 3) de tailles différentes - qui peuvent être combinés entre eux, en particulier dans les zones de trafic moins dense, pour générer des faisceaux « composites » plus larges. Ainsi, les faisceaux de plus grandes dimensions ne sont pas générés par des réflecteurs dédiés ou par des sources désadaptées à la taille des réflecteurs, mais en combinant des faisceaux élémentaires fins. Cela présente plusieurs avantages par rapport à l'art antérieur :
- le système antennaire est beaucoup plus simple et modulaire, car il peut être constitué uniquement de sources identiques et d'un faible nombre de réflecteurs, également identiques entre eux ;
- les pentes des diagrammes restent raides même pour les faisceaux de plus grande taille, minimisant les interférences ;
- il y a une plus grande liberté dans le choix de la forme des faisceaux composites ; par ailleurs, un faisceau composite peut résulter de la combinaison de faisceaux élémentaires non contigus ce qui, comme cela sera expliqué plus loin, autorise une plus grande flexibilité dans l'allocation des ressources spectrales et/ou de puissance.

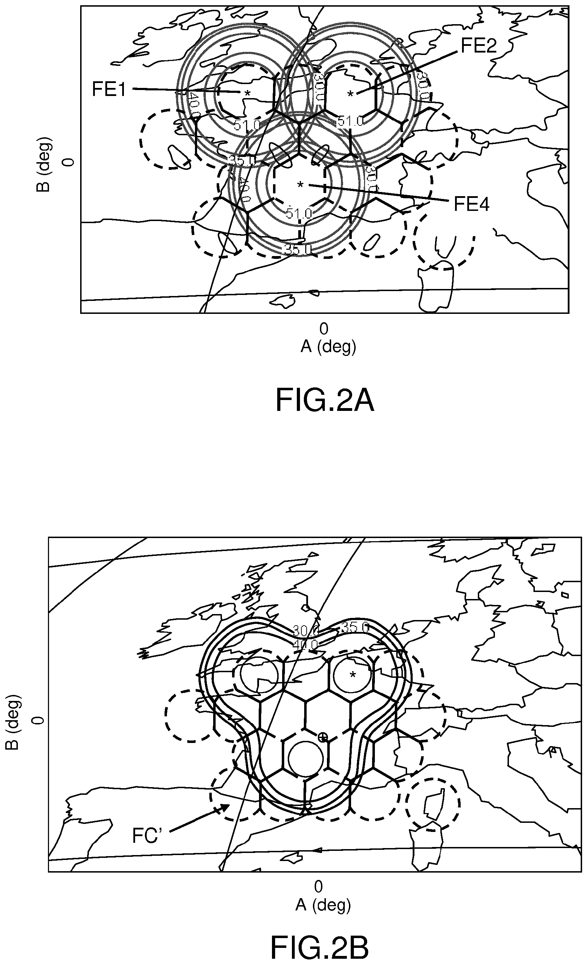

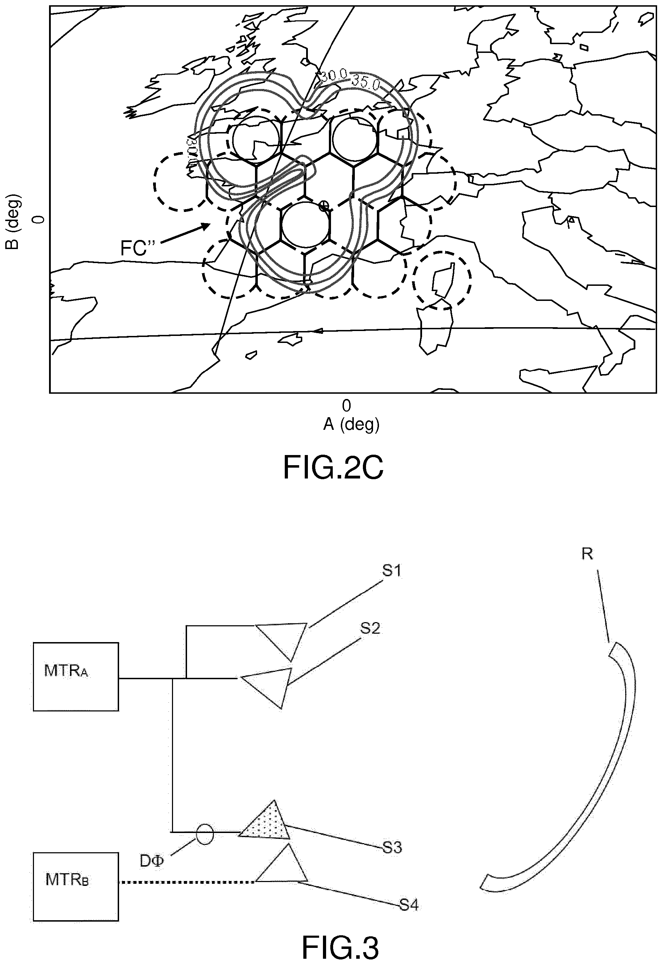

Les figures 2A à 2C illustrent deux variantes d'une couverture multifaisceaux dans laquelle trois faisceaux élémentaires non adjacents et de même couleur, FE1, FE2 et FE4 - dont les courbes de iso-intensité sont illustrées sur la figure 2A - sont combinés pour former un faisceau composite désigné par FC' sur la figure 2B et par FC" sur la figure 2C. Comme dans le cas précédent, cela signifie que les mêmes données transitent par ces trois faisceaux élémentaires, afin de servir des régions - géographiquement séparées entre elles - présentant une faible densité de trafic. Les faisceaux composites FC' et FC" sont obtenus très simplement en connectant les antennes sources correspondantes à un même amplificateur de puissance (en émission) ou à bas bruit (en réception). Dans le cas de la figure 2B, les faisceaux élémentaires de même couleur sont sommés en phase (sommation dite en puissance). Dans le cas de la figure 2C, par contre, un déphaseur de 90° est introduit entre cet amplificateur et l'antenne source du faisceau élémentaire FE2, et un déphaseur de 180° est introduit entre cet amplificateur et l'antenne source du faisceau élémentaire FE4. Comme on peut le voir en comparant les figures 2B et 2C, l'opposition de phase entre les faisceaux FE1 et FE4 produit une annulation de champs entre les faisceaux FE1 et FE4. La mise en quadrature de phase des faisceaux FE1 et FE2, et également des faisceaux FE2 et FE4, permet également de concentrer l'intensité électromagnétique dans les régions devant effectivement être couvertes, en raidissant la pente du diagramme de rayonnement du faisceau composite, sans qu'il n'y ait d'annulation totale de champs comme c'est le cas en opposition de phase. Les trois faisceaux élémentaires interfèrent entre eux, car ils sont d'une même couleur, même si ces interférences sont modérées du fait de la séparation spatiale entre faisceaux. L'introduction de tels déphasages perd son intérêt quand les faisceaux élémentaires sont tellement éloignés que leur interférence devient négligeable.

Des configurations plus complexes, associant plusieurs faisceaux - et le cas échéant avec des déphasages différents de 90° et 180° entre eux - sont bien entendu possibles.

Il est également possible de réaliser des faisceaux composites combinant des faisceaux élémentaires non adjacents et de couleurs différentes.

Le fait de former des faisceaux composites « non connexes », à partir de faisceaux élémentaires non adjacents, peut s'avérer avantageux du point de vue de la gestion des ressources. En effet, dans un faisceau composite, plusieurs régions géographiques distinctes partagent des mêmes ressources : fréquences, puissance, voire temps de transmission, comme cela sera expliqué plus loin. Si ces régions sont éloignées entre elles, leurs conditions météorologiques seront décorrélées : si, par exemple, la région couverte par le faisceau élémentaire FE1 se trouve en conditions de forte atténuation à cause d'un orage, l'atténuation sera probablement moindre dans les régions couvertes par FE2 et FE4. Il sera donc possible d'attribuer plus de ressources à FE1 sans trop dégrader le service offert par FE2 et FE4. Dans le cas de faisceaux adjacents, cela est plus difficile en raison de la corrélation élevée entre les conditions météorologiques entre des régions proches. Si les faisceaux élémentaires sont très éloignés entre eux, il sera même possible de profiter d'un décalage horaire entre les régions correspondantes, en retirant des ressources aux faisceaux couvrant des régions en « heures creuses » au profit de ceux faisant partie du même faisceau composite et couvrant des régions en « heures pleines ».

Jusqu'à présent on a considéré uniquement le cas où des données transitent en même temps à travers tous les faisceaux élémentaires d'un même faisceau composite, ces faisceaux élémentaires se partageant les ressources de fréquence et de puissance attribuées au faisceau composite. En variante, il est possible d'activer à tour de rôle les différents faisceaux élémentaires d'un même faisceau composite, au moyen d'un commutateur disposé dans la charge utile du satellite. Ainsi, chaque faisceau élémentaire utilise - mais seulement pendant une fraction de temps - la totalité des ressources disponibles.

Le faisceau composite a un angle solide multiple d'un nombre n de faisceaux élémentaires. Compte tenu du partage, la directivité est réduite d'un facteur 10.log(n) en dB. Lorsque n est trop élevé, la variation de directivité entre un faisceau élémentaire et un faisceau composite peut être importante et engendrer une variation du rapport signal C du faisceau composite proportionnel à n et donc une diminution du niveau de C/l, l étant les signaux interférents à la même fréquence et polarisation, provenant de faisceaux élémentaires non couplés.

Les faisceaux élémentaires adjacents à un gros faisceau composite peuvent ainsi potentiellement dégrader le rapport signal à bruit (C/l) du faisceau composite. Pour éviter la dégradation du rapport signal à bruit, il peut être avantageux de coupler un nombre limité de faisceaux élémentaires dans un faisceau composite, à proximité immédiate de faisceaux élémentaires extérieurs au faisceau composite. Par exemple, un faisceau composite composé de deux faisceaux élémentaires peut être adjacent à un - faisceau élémentaire. En faisant varier de manière progressive les tailles des empreintes au sol des faisceaux composites, les transitions abruptes de signal dans le rapport signal à bruit sont ainsi évitées.

La figure 3 illustre, de manière très schématique, la structure d'une charge utile de télécommunications, embarquée sur un satellite, permettant la réalisation d'une couverture multifaisceaux telle que décrite plus haut. Une telle charge utile, donnée uniquement à titre d'exemple non limitatif, comprend :
- Deux modules de transmission ou réception - MTR_{A} et MTR_{B} pour générer les signaux devant être transmis par l'intermédiaire de faisceaux composites respectifs (en émission) ou pour acquérir les signaux reçus par ces faisceaux (en réception). Chaque module de transmission ou réception comprend au moins un amplificateur de puissance et/ou à bas bruit.
- Quatre antennes sources S1 - S4 (cornets électromagnétiques) destinés à générer chacun un faisceau élémentaire respectif.
- Un réflecteur R coopérant avec les antennes sources pour générer lesdits faisceaux.

En réalité, un système antennaire selon l'invention comprend typiquement plusieurs réflecteurs et un nombre bien plus élevé d'antennes sources.

Le module MTR_{A} est relié à trois antennes sources S1, S2, S3 pour réaliser un faisceau composite « non connexe », du type des figures 2A à 2C. Un déphaseur DΦ est disposé entre le module et l'antenne source S3.

Enfin, le module MTR_{B} est relié à une seule antenne source, S4, pour réaliser un faisceau « composite » fin, constitué par un seul faisceau élémentaire.

On remarque que le système antennaire de la charge utile représentée sur la figure 3 comprend uniquement des antennes sources identiques entre elles, coopérant avec un réflecteur unique (ou des réflecteurs identiques). Il s'agit donc d'une structure plus simple et plus modulaire que celle d'un système antennaire multifaisceaux classique, comprenant des antennes sources et/ou des réflecteurs de tailles différentes.

## Revendications

1. **Procédé de couverture multifaisceaux d'une région de la surface terrestre** comportant :
- la génération, par une charge utile de télécommunications embarquée sur un satellite, d'une pluralité de faisceaux à radiofréquence, dits faisceaux élémentaires (FE1, FE2, FE4) ;
- la formation d'une pluralité de faisceaux à radiofréquence, dits composites (FC', FC"), présentant des empreintes au sol de tailles différentes, chaque dit faisceau composite étant obtenu par regroupement d'un ou plusieurs faisceaux élémentaires ; et
- l'émission ou la réception de données à travers lesdits faisceaux composites, des données identiques étant émises ou reçues à travers tous les faisceaux élémentaires formant un même faisceau composite ;
dans lequel au moins un dit faisceau composite est formé par regroupement d'une pluralité de faisceaux élémentaires non adjacents et de même couleur, une couleur étant définie par une bande de fréquence et un état de polarisation, et le procédé comprenant l'introduction d'un déphasage entre au moins deux desdits faisceaux élémentaires non adjacents et de même couleur formant ledit faisceau composite.

2. Procédé selon la revendication 1 dans lequel ledit déphasage est une inversion de phase.

3. Procédé selon la revendication 1, dans lequel ledit déphasage est une mise en quadrature de phase.

4. Procédé selon l'une des revendications précédentes dans lequel une pluralité desdits faisceaux élémentaires présente des empreintes au sol de taille identique

5. Procédé selon la revendication 4 dans lequel tous lesdits faisceaux élémentaires présentent des empreintes au sol de taille identique

6. Procédé selon l'une des revendications précédentes dans lequel les empreintes au sol desdits faisceaux composites présentent des tailles qui varient de manière progressive à travers ladite région de la surface terrestre.

7. Procédé selon l'une des revendications précédentes dans lequel tous les faisceaux élémentaires formant un même faisceau composite sont générés en même temps.

8. Procédé selon l'une des revendications 1 à 6 dans lequel tous les faisceaux élémentaires formant un même faisceau composite sont générés à tour de rôle.

9. **Charge utile de télécommunications par satellite** comprenant :
- une pluralité d'antennes sources (S1 - S4) ;
- au moins un réflecteur (R) agencé pour coopérer avec lesdites antennes sources de manière à générer un faisceau à radiofréquence, dit faisceau élémentaire, pour chaque dite antenne source ; et
- une pluralité de modules d'émission ou de réception (MTR_{A}, MTR_{B}) configurés pour émettre ou recevoir des données respectives sous la forme de signaux à radiofréquence ;
dans laquelle chaque dite antenne source appartient à un groupement d'antennes sources, au moins certains desdits groupements comprenant une pluralité d'antennes sources ;
et dans laquelle chaque dit module d'émission ou de réception est relié à l'ensemble des antennes sources appartenant à un même groupement, de telle sorte que les faisceaux élémentaires générés par les antennes sources d'un même groupement forment un faisceau composite, chaque module d'émission ou de réception d'un dit groupement étant configuré pour émettre ou recevoir des données identiques à travers tous les faisceaux élémentaires formant un même faisceau composite ; lesdits groupements d'antennes sources étant configurés de telle sorte qu'une pluralité desdits faisceaux composites présentent des empreintes au sol de tailles différentes ; et
- les antennes élémentaires d'au moins un dit groupement sont configurées pour générer des faisceaux élémentaires non adjacents et de même couleur, une couleur étant définie par une bande de fréquence et un état de polarisation, ladite charge utile comprenant un déphaseur (DΦ) agencé entre au moins une antenne élémentaire d'au moins un dit groupement configuré pour générer des faisceaux élémentaires non adjacents et de même couleur et le module d'émission ou de réception correspondant, ledit déphaseur (DΦ) étant configuré pour introduire un déphasage entre au moins deux faisceaux élémentaires non adjacents et de même couleur formant un faisceau composite.

10. Charge utile de télécommunications selon la revendication 9 dans lequel ledit ou chaque dit déphaseur est un inverseur de phase.

11. Charge utile de télécommunications selon la revendication 9 dans lequel ledit ou chaque dit déphaseur est configuré pour effectuer un déphasage à 90°.

12. Charge utile de télécommunications selon l'une des revendications 9 à 11 dans lequel lesdits groupements d'antennes sources sont configurés de telle sorte que tous lesdits faisceaux élémentaires présentent des empreintes au sol de taille identique

13. Charge utile de télécommunications selon l'une des revendications 9 à 12 dans lequel au moins un dit module d'émission ou de réception est équipé d'un commutateur configuré pour relier ledit module aux antennes élémentaires correspondantes à tour de rôle.

## Patentansprüche

1. Verfahren zur Mehrfachstrahlabdeckung einer Region der Erdoberfläche, das Folgendes umfasst:
- Erzeugen, durch eine an Bord eines Satelliten befindliche Telekommunikationsnutzlast, einer Vielzahl von Hochfrequenzstrahlen, Elementarstrahlen (FE1, FE2, FE4) genannt;
- Bilden einer Vielzahl von Hochfrequenzstrahlen, zusammengesetzte Strahlen (FC', FC") genannt, die Bodenflächen unterschiedlicher Größe aufweisen, wobei jeder zusammengesetzte Strahl durch Bündeln von einem oder mehreren Elementarstrahlen erhalten wird; und
- Senden oder Empfangen von Daten über die zusammengesetzten Strahlen, wobei identische Daten über alle Elementarstrahlen gesendet oder empfangen werden, die einen einzigen zusammengesetzten Strahl bilden;
wobei mindestens ein zusammengesetzter Strahl durch Bündeln einer Vielzahl nicht benachbarter Elementarstrahlen gleicher Farbe gebildet wird, wobei eine Farbe durch ein Frequenzband und einen Polarisationszustand definiert ist, und
wobei das Verfahren das Einleiten einer Phasenverschiebung zwischen mindestens zwei der nicht benachbarten Elementarstrahlen gleicher Farbe, die den zusammengesetzten Strahl bilden, umfasst.

2. Verfahren nach Anspruch 1, wobei die Phasenverschiebung eine Phasenumkehr ist.

3. Verfahren nach Anspruch 1, wobei die Phasenverschiebung eine Phasenquadraturschaltung ist.

4. Verfahren nach einem der vorherigen Ansprüche, wobei eine Vielzahl der Elementarstrahlen Bodenflächen von identischer Größe aufweist.

5. Verfahren nach Anspruch 4, wobei alle Elementarstrahlen Bodenflächen von identischer Größe aufweisen.

6. Verfahren nach einem der vorherigen Ansprüche, wobei die Bodenflächen der zusammengesetzten Strahlen Größen aufweisen, die progressiv über die Region der Erdoberfläche variieren.

7. Verfahren nach einem der vorherigen Ansprüche, wobei alle Elementarstrahlen, die einen selben zusammengesetzten Strahl bilden, zur gleichen Zeit erzeugt werden.

8. Verfahren nach einem der Ansprüche 1 bis 6, wobei alle Elementarstrahlen, die einen selben zusammengesetzten Strahl bilden, abwechselnd erzeugt werden.

9. Satellitenkommunikationsnutzlast, die Folgendes umfasst:
- mehrere Quellantennen (S1 - S4);
- mindestens einen Reflektor (R), ausgelegt zum Zusammenwirken mit den Quellantennen, um einen Hochfrequenzstrahl, Elementarstrahl genannt, für jede Quellantenne zu erzeugen; und
- eine Vielzahl von Sende- oder Empfangsmodulen (MTR_{A}, MTR_{B}), die zum Senden oder Empfangen jeweiliger Daten in Form von Hochfrequenzsignalen konfiguriert sind;
wobei jede Quellantenne zu einer Gruppe von Quellantennen gehört, wobei zumindest einige der Gruppen mehrere Quellantennen umfassen;
und wobei jedes Sende- oder Empfangsmodul mit allen zu einer selben Gruppe gehörenden Quellantennen verbunden ist, so dass die von den Quellantennen einer selben Gruppe erzeugten Elementarstrahlen einen zusammengesetzten Strahl bilden, wobei jedes Sende- oder Empfangsmodul einer Gruppe zum Senden oder Empfangen identischer Daten über alle Elementarstrahlen konfiguriert ist, die einen selben zusammengesetzten Strahl bilden;
wobei die Gruppen von Quellantennen so konfiguriert sind, dass eine Vielzahl der zusammengesetzten Strahlen Bodenflächen unterschiedlicher Größe aufweist; und
- die Elementarantennen von mindestens einer Gruppe zum Erzeugen von nicht benachbarten Elementarstrahlen gleicher Farbe konfiguriert sind, wobei eine Farbe durch ein Frequenzband und einen Polarisationszustand definiert ist,
wobei die Nutzlast einen Phasenschieber (DΦ) umfasst, der zwischen mindestens einer Elementarantenne von mindestens einer Gruppe, die zum Erzeugen von nicht benachbarten Elementarstrahlen gleicher Farbe konfiguriert ist, und dem entsprechenden Sende- oder Empfangsmodul angeordnet ist, wobei der Phasenschieber (DΦ) zum Einführen einer Phasenverschiebung zwischen mindestens zwei nicht benachbarten Elementarstrahlen gleicher Farbe konfiguriert ist, die einen zusammengesetzten Strahl bilden.

10. Telekommunikationsnutzlast nach Anspruch 9, wobei der oder jeder Phasenschieber ein Phasenumkehrer ist.

11. Telekommunikationsnutzlast nach Anspruch 9, wobei der oder jeder Phasenschieber zum Bewirken einer 90°-Phasenverschiebung konfiguriert ist.

12. Telekommunikationsnutzlast nach einem der Ansprüche 9 bis 11, wobei die Gruppen von Quellantennen so konfiguriert sind, dass alle Elementarstrahlen Bodenflächen identischer Größe aufweisen.

13. Telekommunikationsnutzlast nach einem der Ansprüche 9 bis 12, wobei mindestens ein Sende- oder Empfangsmodul mit einem Schalter ausgestattet ist, der zum abwechselnden Verbinden des Moduls mit den entsprechenden Elementarantennen konfiguriert ist.

## Claims

1. A method for multibeam coverage of a region of the surface of the Earth comprising:
- the generation, by a telecommunications payload embedded on a satellite, of a plurality of radiofrequency beams, called elementary beams (FE1, FE2, FE4);
- the formation of a plurality of radiofrequency beams, called composite beams (FC', FC"), having footprints on the ground of different sizes, each said composite beam being obtained by the grouping of one or more elementary beams; and
- the transmission or the reception of data through said composite beams, identical data being transmitted or received through all the elementary beams forming one and the same composite beam;
wherein at least one said composite beam is formed by the grouping of a plurality of non-adjacent elementary beams of the same colour, a colour being defined by a frequency band and a polarisation state, and
the method comprising introducing a phase shift between at least two of said non-adjacent elementary beams of the same colour forming said composite beam.

2. The method according to claim 1, wherein said phase shift is a phase inversion.

3. The method according to claim 1, wherein said phase shift is a phase quadrature setting.

4. The method according to one of the preceding claims, wherein a plurality of said elementary beams have footprints on the ground of identical size.

5. The method according to claim 4, wherein all said elementary beams have footprints on the ground of identical size.

6. The method according to one of the preceding claims, wherein the footprints on the ground of said composite beams have sizes which vary progressively across said region of the surface of the Earth.

7. The method according to one of the preceding claims, wherein all the elementary beams forming one and the same composite beam are generated at the same time.

8. The method according to one of claims 1 to 6, wherein all the elementary beams forming one and the same composite beam are generated in turn.

9. A satellite telecommunications payload, comprising:
- a plurality of feed antennas (S1 - S4);
- at least one reflector (R) arranged to cooperate with said feed antennas so as to generate a radiofrequency beam, said elementary beam, for each said feed antenna; and
- a plurality of transmission or reception modules (MTR_{A}, MTR_{B}) configured to transmit or receive respective data in the form of radiofrequency signals;
wherein each said feed antenna belongs to a grouping of feed antennas, at least some of said groupings comprising a plurality of feed antennas;
and wherein each said transmission or reception module is linked to all the feed antennas belonging to one and the same grouping, such that the elementary beams generated by the feed antennas of one and the same grouping form a composite beam; each transmission or reception module of one said grouping is configured to transmit or receive identical data through all the elementary beams forming one and the same composite beam;
said groupings of feed antennas being configured such that a plurality of said composite beams have footprints on the ground of different sizes; and
- the elementary antennas of at least one said grouping are configured to generate non-adjacent elementary beams of the same colour, a colour being defined by a frequency band and a polarisation state,
said payload comprising a phase shifter (DΦ) arranged between at least one elementary antenna of at least one said grouping configured to generate non-adjacent elementary beams of the same colour and the corresponding transmission or reception module, the phase shifter (DΦ) being configured to introduce a phase shift between at least two of said non-adjacent elementary beams of the same colour forming said composite beam.

10. The telecommunications payload according to claim 9, wherein said or each said phase shifter is a phase inverter.

11. The telecommunications payload according to claim 9, wherein said or each said phase shifter is configured to perform a 90° phase shift.

12. The telecommunications payload according to one of claims 9 to 11, wherein said groupings of feed antennas are configured such that all said elementary beams have footprints on the ground of identical size.

13. The telecommunications payload according to one of claims 9 to 12, wherein at least one said transmission or reception module is equipped with a switch configured to link said module to the corresponding elementary antennas in turn.
